# EUROPEAN PATENT SPECIFICATION

(11) **EP 2 176 535 B1**
(45) Date of publication and mention of the grant of the patent: **08.06.2016**
(21) Application number: 08790922.2
(22) Date of filing: 01.07.2008
(51) Int. Cl.: F02D 41/02, F02D 41/24, F16H 61/14, F02D 41/14

(54) **CONTROL DEVICE AND CONTROL METHOD FOR VEHICLE**
STEUERVORRICHTUNG UND STEUERVERFAHREN FÜR EIN FAHRZEUG
DISPOSITIF DE COMMANDE ET PROCÉDÉ DE COMMANDE POUR UN VÉHICULE

(30) Priority: 05.07.2007 JP 2007177368
(43) Date of publication of application: 21.04.2010
(73) Proprietor: TOYOTA JIDOSHA KABUSHIKI KAISHA, Toyota-shi, Aichi-ken, 471-8571 (JP)
(72) Inventor: MINAKI, Shun, Toyota-shi Aichi 471-8571 (JP); OSHIMA, Koji, Toyota-shi Aichi 471-8571 (JP)
(74) Representative: D Young & Co LLP
(86) International application number: PCT/JP2008/062256
(87) International publication number: WO 2009/005165

(56) References cited:
- JP-A- 2005 036 788
- US-A1- 2001 023 155
- US-A1- 2007 015 630
- US-B1- 6 427 109

## Description

### Technical Field

The present disclosure relates to a control device for a vehicle equipped with a diesel engine and an automatic transmission that includes a fluid coupling provided with a lock-up clutch, and particularly relates to a technique of temporarily performing slip control during control of learning about small injection amount of the diesel engine.

### Background Art

An automatic transmission for a vehicle includes a fluid coupling connected to an output shaft of an engine, and a gear-type multiple-step transmission mechanism or a belt-type or traction-type continuously variable transmission mechanism connected to an output shaft of the fluid coupling. An example of the fluid coupling is a torque converter, which often has a lock-up clutch capable of directly coupling an input side and an output side of the torque converter. By engaging the lock-up clutch, the input side and the output side of the torque converter are controlled such that they are directly coupled, or engagement force of the lock-up clutch is feedback-controlled (slip-controlled) to be in a prescribed state in accordance with a difference between a pump rotation speed on the input side (which corresponds to an engine rotation speed) and a turbine rotation speed on the output side so as to control a torque transmitted state of the torque converter.

Further, in the diesel engine, there is known a technique of injecting a small amount of fuel prior to a main injection so as to reduce combustion noise and suppress NOx. To sufficiently exhibit the effects, it is necessary to improve accuracy of a small injection, and hence it is necessary to learn about an injection amount.

In view of such problems, Japanese Patent Laying-Open No. 2005-36788, for example, discloses a fuel injection control device for a diesel engine, which does not involve cost increase due to additional installation of sensors and others and is capable of performing injection amount learning with high accuracy. The fuel injection control device includes: learning condition determination means for determining whether or not a learning condition for performing a learning injection from an injector to a specific cylinder of the diesel engine is established; learning injection command means for command the injector to perform the learning injection to the specific cylinder; rotation speed detection means for detecting a rotation speed of the diesel engine as an engine rotation speed; rotation speed increased amount calculation means for calculating, as a rotation speed increased amount, a rotation speed fluctuation amount between in the case where the learning injection is performed and in the case where the learning injection is not performed; injection amount calculation means for calculating an actually-injected amount actually injected from the injector or an actually-injected amount related value relating to the actually-injected amount, based on the calculated rotation speed increased amount; and corrected injection amount calculation means for calculating, as a corrected injection amount, a difference between the calculated, actually-injected amount and a command injection amount which the injector is commanded to inject, or a difference between the calculated, actually-injected amount related value and a command injection amount related value relating to the command injection amount.

According to the fuel injection control device disclosed in the above-described publication, the rotation speed fluctuation amount between in the case where the learning injection is performed and in the case where the learning injection is not performed, namely, a difference (rotation speed increased amount) between an engine rotation speed (estimated value) in the case where the learning injection is not performed and an engine rotation speed in the case where the learning injection is performed remains the same regardless of variations in load (e.g. an air conditioner, an alternator, and the like) applied to the diesel engine, as long as the engine rotation speed obtained when the learning injection is performed remains the same. It is therefore possible to determine an increased amount of the engine rotation speed from the value detected by the rotation speed detection means, and based on the rotation speed increased amount, calculate with high accuracy the actually-injected amount actually injected from the injector, or the actually-injected amount related value.

However, in the fuel injection control device disclosed in the above-describe publication, when the lock-up clutch of the automatic transmission is in an engaged state, vibrations from wheels are transmitted to the engine, and hence it is not possible to grasp with high accuracy an increased amount of the rotation speed, which corresponds to the learning injection carried out. Therefore, it may not be possible to ensure a frequency of learning with which sufficient accuracy can be obtained for the injection amount learning.

Other background art is US2007/015630 which relates to a fuel injection controller of an internal combustion engine.

Examples of the present disclosure seek to provide a control device for a vehicle and a control method for a vehicle, both of which control a lock-up clutch to ensure a frequency of fuel injection amount learning with which sufficient accuracy can be obtained.

Aspects of the invention are defined in the appended claims.

A control device for a vehicle according to an example of the present disclosure is a control device for a vehicle equipped with a diesel engine and an automatic transmission which includes a fluid coupling provided with a lock-up clutch. The lock-up clutch is controlled to be in any of an engaged state, a semi-engaged state, and a released state in accordance with a state of the vehicle. The control device includes: detection means for detecting information which relates to the state of the vehicle; determination means for determining whether or not a predetermined condition for starting learning about a relation between a fuel injection amount of the diesel engine and generated torque is established, based on the detected information; control means for controlling, when the learning condition is established, engagement force of the lock-up clutch such that the lock-up clutch is brought into the semi-engaged state; and learning means for starting the learning when the lock-up clutch is brought into the semi-engaged state.

According to examples of the present disclosure, it is possible to perform the learning about the relation between the fuel injection amount of the diesel engine and generated torque when the lock-up clutch is in the semi-engaged state, and hence sufficient learning accuracy can be ensured. Further, the lock-up clutch is controlled to be in the semi-engaged state when the predetermined condition for starting the learning (e.g. conditions for a total travel distance of the vehicle and for a total travel distance in a manual transmission mode) is established. Therefore, by setting the condition such that sufficient accuracy can be obtained for the injection amount learning, it is possible to ensure a learning frequency. Accordingly, it is possible to provide the control device for the vehicle and the control method for the vehicle, both of which control the lock-up clutch such that it is possible to ensure a frequency of injection amount learning with which sufficient accuracy can be obtained.

Preferably, the automatic transmission has an automatic transmission mode in which gear shifting is performed automatically in accordance with a traveling state of the vehicle, and a manual transmission mode in which gear shifting is performed in accordance with a driver's manipulation instruction. The predetermined condition includes at least a condition for a total travel distance of the vehicle and a condition for a total travel distance in the manual transmission mode.

According to examples of the present disclosure, the lock-up clutch tends to be in the engaged state all the time in the manual transmission mode, and hence if a ratio of the total travel distance in the manual transmission mode to the total travel distance is high, it can be determined that a frequency of performing the learning is low. Therefore, by bringing the lock-up clutch into the semi-engaged state and starting the injection amount learning when at least the condition for the total travel distance of the vehicle and the condition for the total travel distance in the manual transmission mode are established, it is possible to ensure sufficient learning accuracy. Further, when the condition for starting the learning is established, the lock-up clutch is controlled to be in the semi-engaged state and the injection amount learning is started, and hence it is possible to ensure a learning frequency with which sufficient accuracy can be obtained for the injection amount learning.

Further preferably, the predetermined condition includes, in addition to the condition for the total travel distance of the vehicle and the condition for the total travel distance in the manual transmission mode, at least one of a condition for a speed of the vehicle, a condition for a temperature of the fuel, a condition for a temperature of a cooling liquid which circulates through the diesel engine, a condition for a temperature of intake air of the diesel engine, and a condition for a temperature of hydraulic oil which circulates through the automatic transmission.

According to examples of the present disclosure, it is possible to start the learning in accordance with the traveling state of the vehicle, an operating state of the engine, or a state of the automatic transmission. Therefore, it is possible to perform the learning at an appropriate point in time when sufficient learning accuracy can be obtained, to ensure learning accuracy.

Further preferably, the control means controls the engagement force of the lock-up clutch such that a slip amount of the lock-up clutch becomes a predetermined amount.

According to examples of the present disclosure, it is possible to control the engagement force of the lock-up clutch such that the slip amount of the lock-up clutch becomes the predetermined amount, to bring the lock-up clutch into the semi-engaged state. At this time, by performing the injection amount learning, it is possible to ensure learning accuracy.

Further preferably, the learning means starts the learning when the vehicle is in a driven state and a slip amount of the lock-up clutch becomes larger than a slip amount which corresponds to the semi-engaged state.

According to examples of the present disclosure, the learning is started when the vehicle is in the driven state and the slip amount of the lock-up clutch becomes the slip amount that corresponds to the semi-engaged state. Therefore, it is possible to perform the learning at an appropriate point in time when sufficient learning accuracy can be obtained, to ensure learning accuracy.

Further preferably, the learning means stops the learning when a rotation speed of an output shaft of the fluid coupling becomes smaller than a predetermined rotation speed.

If the rotation speed of the output shaft becomes smaller than the predetermined rotation speed during the learning, the engine may stall. Therefore, by stopping the learning when the rotation speed of the output shaft of the fluid coupling becomes smaller than the predetermined rotation speed, it is possible to avoid stalling of the engine.

Further preferably, the learning means stops the learning at an elapse of predetermined time from the start of the learning.

According to examples of the present disclosure, the learning is stopped at the elapse of the predetermined time from the start of the learning. If the lock-up clutch is in the semi-engaged state, responsiveness of driving force with respect to the accelerator pedal position is degraded. Therefore, by restricting a period for performing the learning to fall within the predetermined time, it is possible to suppress a driver's feeling that the vehicle is not in a normal state owing to degradation in responsiveness.

Further preferably, when a slip amount of the lock-up clutch is larger than a predetermined amount at the elapse of the predetermined time, the control means controls the engagement force of the lock-up clutch such that the lock-up clutch is prevented from returning to the engaged state.

According to examples of the present disclosure, if a slip amount is large when the lock-up clutch is about to return to the engaged state from the semi-engaged state, shock may occur when the lock-up clutch is engaged. Therefore, by providing control such that the lock-up clutch is prevented from returning to the engaged state when the slip amount of the lock-up clutch becomes larger than the predetermined amount, it is possible to suppress occurrence of shock.

Further preferably, the learning means learns about the relation between the fuel injection amount and the generated torque based on a torque fluctuation amount obtained when a predetermined amount of fuel is injected.

According to examples of the present disclosure, by learning about the relation between the fuel injection amount and the generated torque based on the torque fluctuation amount obtained when the predetermined amount of fuel is injected, it is possible to improve accuracy of the injection amount.

### Brief Description of the Drawings

Fig. 1 is a control block diagram of a vehicle equipped with a control device according to a present embodiment.
Fig. 2 is a functional block diagram of an ECU identified as the control device for the vehicle according to the present embodiment.
Fig. 3 is a flowchart that shows a control structure of a program executed by an ECU identified as the control device for the vehicle according to the present embodiment.
Fig. 4 is a (first) timing chart that shows an operation of the ECU identified as the control device for the vehicle according to the present embodiment.
Fig. 5 is a (second) timing chart that shows an operation of the ECU identified as the control device for the vehicle according to the present embodiment.
Fig. 6 is a (third) timing chart that shows an operation of the ECU identified as the control device for the vehicle according to the present embodiment.

The embodiment of the present invention will hereinafter be described with reference to the drawings. In the following description, the same parts are provided with the same reference characters, and have the same names and functions as well. Therefore, the detailed description thereof will not be repeated.

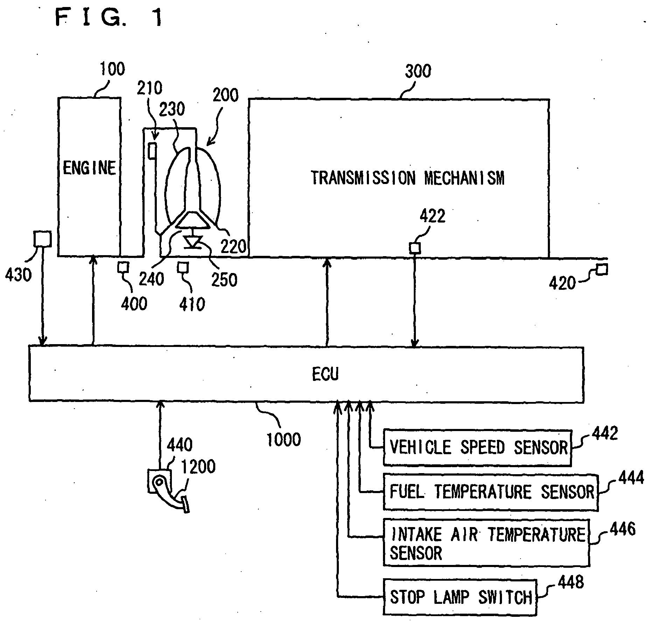

A power train of a vehicle equipped with a control device according to an embodiment of the present invention will now be described. The control device for the vehicle according to the present embodiment is implemented by a program executed by an ECU (Electronic Control Unit) 1000 shown in Fig. 1. In the present embodiment, an automatic transmission will be described as an automatic transmission that has a torque converter serving as a fluid coupling, and a gear-type transmission mechanism formed of a planetary gear unit. Note that the automatic transmission may be an automatic transmission that has, instead of the gear-type transmission mechanism, a belt-type or traction-type continuously variable transinission mechanism (CVT) that changes a transmission gear ratio in a continuous manner.

As shown in Fig. 1, the power train of the vehicle is configured with an engine 100, a torque converter 200, a transmission mechanism 300, and ECU 1000 that controls the power train.

An output shaft of engine 100 is connected to an input shaft of torque converter 200. Engine 100 and torque converter 200 are coupled by means of a rotary shaft. Therefore, an output shaft rotation speed NE of engine 100 (engine rotation speed NE) detected by an engine rotation speed sensor 400 is equal to an input shaft rotation speed of torque converter 200 (pump rotation speed). Engine rotation speed sensor 400 transmits to ECU 1000 a signal that indicates the detected engine rotation speed NE.

Torque converter 200 is configured with a lock-up clutch 210 that brings the input shaft and the output shaft into a directly-coupled state, a pump impeller 220 on the input shaft side, a turbine runner 230 on the output shaft side, and a stator 240 that has a one-way clutch 250 and carries out a torque amplifying function.

Torque converter 200 and transmission mechanism 300 are connected by means of a rotary shaft. An output shaft rotation speed NT of torque converter 200 (turbine rotation speed NT) is detected by a turbine rotation speed sensor 410. Turbine rotation speed sensor 410 transmits to ECU 1000 a signal that indicates the detected turbine rotation speed NT. Further, an output shaft rotation speed NOUT of transmission mechanism 300 is detected by an output shaft rotation speed sensor 420. Output shaft rotation speed sensor 420 transmits to ECU 1000 the detected output shaft rotation speed NOUT.

The above-described rotation speed sensors are provided to face the teeth of gears for rotation detecting purpose attached to the input shaft of torque converter 200, the output shaft of torque converter 200, and the output shaft of transmission mechanism 300. These rotation speed sensors are sensors which are capable of detecting even slight rotation of the input shaft of torque converter 200, the output shaft of torque converter 200, and the output shaft of transmission mechanism 300, and which use a magnetoresistive element and generally referred to as semiconductor-type sensors.

Further, a vehicle speed sensor 442 that detects a wheel rotation speed is provided at a wheel. Vehicle speed sensor 442 transmits to ECU 1000 a signal that indicates the detected rotation speed of the wheel. ECU 1000 calculates a vehicle speed based on the received signal that indicates the wheel rotation speed. Note that ECU 1000 may also calculate a vehicle speed based on output shaft rotation speed NOUT and a final gear ratio.

Such an automatic transmission is provided with a clutch and a brake, which are identified as a plurality of friction elements, inside transmission mechanism 300. Based on a predetermined table of operation, a hydraulic circuit is controlled such that the clutch element (e.g. clutches C1-C4) and/or the brake element (e.g. brakes B1-B4), which are identified as friction elements, are engaged and released corresponding to each requested gear. The automatic transmission has shift positions (shift ranges) such as a parking (P) range, a reverse (R) range, a neutral (N) range, and a drive (D) range. Further, in the present embodiment, the automatic transmission has an automatic transmission mode in which a gear is automatically shifted to an appropriate transmission gear in accordance with a traveling state of the vehicle, and a manual transmission mode in which a gear is shifted in accordance with a driver's manipulation instruction caused by a shift lever being manipulated.

Transmission mechanism 300 is provided with an AT oil temperature sensor 422 that detects a temperature of hydraulic oil that circulates therethrough (hereinafter described as an AT oil temperature). AT oil temperature sensor 422 transmits to ECU 1000 a signal that indicates the detected AT oil temperature.

Engine 100 is provided with a water temperature sensor 430 that detects a temperature of a cooling liquid that circulates through engine 100. Water temperature sensor 430 transmits to ECU 1000 a signal that indicates the detected temperature of the cooling liquid.

An accelerator pedal 1200 is provided with an accelerator pedal position sensor 440 that detects a pedal position of accelerator pedal 1200. Accelerator pedal position sensor 440 transmits to ECU 1000 a signal that indicates the detected pedal position of accelerator pedal 1200.

Engine 100 is provided with a fuel temperature sensor 444 that detects a temperature of fuel supplied to engine 100. Fuel temperature sensor 444 transmits to ECU 1000 a signal that indicates the detected temperature of the fuel.

Engine 100 is provided with an intake air temperature sensor 446 that detects a temperature of air drawn into engine 100. Intake air temperature sensor 446 transmits to ECU 1000 a signal that indicates the detected temperature of the intake air.

A brake pedal (not shown) is provided with a stop lamp switch 448 that is turned on when the brake pedal is pressed down on by a predetermined amount. Stop lamp switch 448 transmits to ECU 1000 an on signal or an off signal (which is also referred to as a brake signal in the following description). Note that, instead of stop lamp switch 448, a stroke sensor of the brake pedal or a master cylinder pressure sensor may also be used to detect the state in which the brake pedal is released and the state in which the brake pedal is pressed down on.

Based on these signals, ECU 1000 controls engine 100, lock-up clutch 210, transmission mechanism 300, and others.

For example, ECU 1000 determines an opening position of a throttle valve in accordance with the input accelerator pedal position, and outputs to engine 100 an engine control signal such as an electronic throttle control signal. Further, ECU 1000 outputs, to a solenoid for controlling the lock-up clutch, a lock-up clutch control signal (LC control signal) for torque converter 200. Based on the lock-up clutch control signal, the solenoid for controlling the lock-up clutch is duty-controlled, so that engagement force (engagement pressure) of the lock-up clutch is controlled. In other words, the control solenoid adjusts engagement force of the lock-up clutch in accordance with an output value (duty ratio) of the lock-up clutch control signal.

ECU 1000 outputs to transmission mechanism 300 a solenoid control signal. Based on the solenoid control signal, a linear solenoid valve, an on-off solenoid valve, or the like of the hydraulic circuit in transmission mechanism 300 is controlled, and the frictional engagement elements are controlled to be in an engaged or released state so as to configure a prescribed transmission gear (e.g. a first speed to a fifth speed). Further, ECU 1000 has a memory that stores various types of data and programs.

Lock-up clutch 210 is subjected to engagement control, release control, or slip control in accordance with a traveling state of the vehicle. Specifically, when a traveling state of the vehicle (e.g. a throttle opening position and a vehicle speed) is in an engagement range that causes lock-up clutch 210 to be engaged, lock-up clutch 210 is subjected to the engagement control. When a traveling state of the vehicle is in a release range that causes lock-up clutch 210 to be released, lock-up clutch 210 is subjected to the release control. Further, when a traveling state of the vehicle is in a slip control range that causes lock-up clutch 210 to be controlled to slip, lock-up clutch 210 is subjected to the slip control. With each control, lock-up clutch 210 is controlled to be in any of an engaged state, a released state, and a semi-engaged state.

In a vehicle equipped with an automatic transmission that has the manual transmission mode in which gear shifting is performed in accordance with a driver's instruction, lock-up clutch 210 is controlled to be in the engaged state all the time so as to improve responsiveness of driving force for the vehicle with respect to a driver's accelerator manipulation.

In the present embodiment, engine 100 is a diesel engine. In the diesel engine, a small amount of fuel is injected prior to a main injection to reduce combustion noise and suppress NOx. To sufficiently exhibit the effects, it is necessary to improve accuracy for the small injection, so that it is necessary to learn about an injection amount.

However, when lock-up clutch 210 is in the engaged state, vibrations from the wheels are transmitted to engine 100. Therefore, it is not possible to grasp with high accuracy an increased amount of the rotation speed, which corresponds to the learning injection carried out. Therefore, it may not be possible to ensure a learning frequency with which sufficient accuracy can be obtained for injection amount learning.

In view of the foregoing, the present invention is characterized in that ECU 1000_ determines whether or not a predetermined condition for starting learning about a relation between a fuel injection amount of engine 100 and generated torque is established, and controls, when the predetermined condition is established, engagement force of lock-up clutch 210 such that lock-up clutch 210 is brought into the semi-engaged state, and starts, when lock-up clutch 210 is brought into the semi-engaged state, the above-described learning about the injection amount.

The predetermined condition includes at least a condition for a total travel distance of the vehicle, and a condition for a total travel distance in the manual transmission mode. In the present embodiment, the predetermined condition includes, in addition to the condition for the total travel distance of the vehicle and the condition for the total travel distance in the manual transmission mode, a condition for a vehicle speed, a condition for a fuel temperature, a condition for a temperature of a cooling liquid that circulates through the diesel engine, a condition for a temperature of air drawn in by the diesel engine, and a condition for a temperature of hydraulic oil that circulates through the automatic transmission. Note that the predetermined condition may include at least any one of the plurality of conditions described above other than the condition for the total travel distance of the vehicle and the condition for the total travel distance in the manual transmission mode.

When the predetermined condition is established, ECU 1000 controls engagement force of lock-up clutch 210 such that a slip amount of lock-up clutch 210 becomes a predetermine amount. ECU 1000 controls engagement force of the lock-up clutch such that, for example, a slip amount of lock-up clutch 210 becomes a predetermined amount by feedback control. When the vehicle is in a driven state (coasting state) and when a slip amount of the lock-up clutch becomes a slip amount that corresponds to the semi-engaged state, ECU 1000 starts the learning.

When ECU 1000 starts the learning, it learns about a relation between a fuel injection amount and generated torque based on a torque fluctuation amount of engine 100 obtained when a predetermined small amount of fuel is injected. The torque fluctuation amount of engine 100 may be directly detected, or may also be estimated based on, for example, a changed amount of an engine rotation speed and an engine rotation speed at injection. The injection amount learning is performed by, for example, detecting a difference between an actually-injected fuel amount estimated from the torque fluctuation amount and a command value for an injection amount, as a deviation of the injection amount. However, the learning is not particularly limited to such a learning mode.

When turbine rotation speed NT of torque converter 200 becomes smaller than a predetermined rotation speed before predetermined time elapses, ECU 1000 stops the learning. Alternatively, ECU 1000 stops the learning at an elapse of the predetermined time from the start of the learning. Note that, if a slip amount of lock-up clutch 210 becomes larger than a predetermined amount at the elapse of the predetermined time, ECU 1000 controls engagement force of lock-up clutch 210 such that lock-up clutch 210 is prevented from returning to the engaged state.

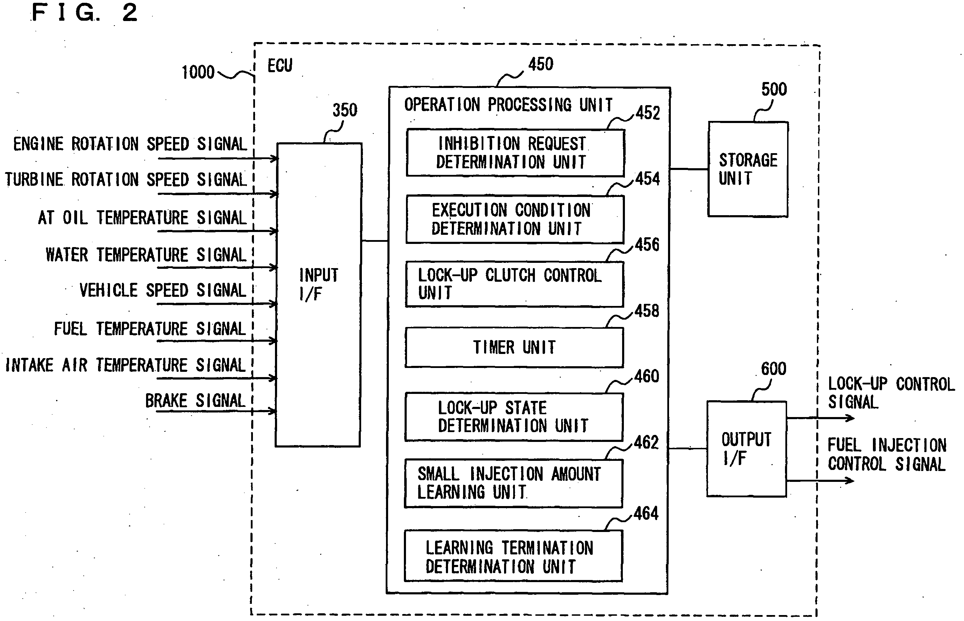

Fig. 2 shows a functional block diagram of ECU 1000 identified as the control device for the vehicle according to the present embodiment. ECU 1000 includes an input interface (hereinafter described as input I/F) 350, an operation processing unit 450, a storage unit 500, and an output interface (hereinafter described as output I/F) 600.

Input I/F 350 receives the signal that indicates engine rotation speed NE from engine rotation speed sensor 400, the signal that indicates turbine rotation speed NT from turbine rotation speed sensor 410, the signal that indicates a temperature of the hydraulic oil that circulates through the automatic transmission from AT oil temperature sensor 422, the signal that shows a temperature of the cooling liquid from water temperature sensor 430, the signal that shows a vehicle speed from vehicle speed sensor 442, the signal that indicates a temperature of the fuel from fuel temperature sensor 444, and the signal that indicates a temperature of the intake air from intake air temperature sensor 446, and transmits them to operation processing unit 450.

Operation processing unit 450 includes an inhibition request determination unit 452, an execution condition determination unit 454, a lock-up clutch control unit 456, a timer unit 458, a lock-up state determination unit 460, a small injection amount learning unit 462, and a learning termination determination unit 464.

Inhibition request determination unit 452 determines whether or not a state of the vehicle satisfies the predetermined condition. The predetermined condition includes a condition that a total travel distance A is longer than A (0), a condition that a total travel distance B in the manual transmission mode is longer than B (0), a condition that a vehicle speed C is higher than C (0), a condition that a fuel temperature D is higher than D (0), a condition that a water temperature E is higher than E (0), a condition that an intake air temperature F is higher than F (0), and a condition that an AT oil temperature G is higher than G (0). Each of A (0)-G (0) is a predetermined value, and is adapted by an experiment or the like. When the predetermined condition is established, inhibition request determination unit 452 turns on an inhibition request flag.

Execution condition determination unit 454 determines whether or not engine 100 is in an idle state and turbine rotation speed NT is larger than NT (0). If ran accelerator pedal position is approximately zero and engine rotation speed NE is equal to or smaller than a predetermined rotation speed, for example, execution condition determination unit 454 determines that engine 100 is in the idle state. Note that execution condition determination unit 454 may also turn on an idle determination flag if it determines that engine 100 is in the idle state and that turbine rotation speed NT is larger than NT (0). NT (0) is a predetermined rotation speed, and adapted by an experiment or the like.

If engine 100 is in the idle state and turbine rotation speed NT is larger than NT (0), lock-up clutch control unit 456 feedback-controls engagement force of lock-up clutch 210 such that a slip amount becomes a predetermined amount. The predetermined amount is not particularly limited. Lock-up clutch control unit 456 transmits a control signal that corresponds to engagement force of lock-up clutch 210 to the control solenoid via output I/F 600. Note that lock-up clutch control unit 456 may also control engagement force of lock-up clutch 210 such that, if the idle determination flag is turned on, for example, lock-up clutch 210 is brought into the semi-engaged state.

Further, if turbine rotation speed NT becomes equal to or smaller than NT (1) when small injection amount learning unit 462 performs the small injection amount learning, lock-up clutch control unit 456 terminates the slip control. In this case, lock-up clutch control unit 456 transmits a control signal to the control solenoid via output I/F 600 such that engagement force of lock-up clutch 210 is reduced so as to avoid stalling of engine 100.

Further, if the slip amount is smaller than a predetermined amount after learning termination determination unit 464 determines that the small injection amount learning is terminated, lock-up clutch control unit 456 performs lock-up control in accordance with the slip amount.

If the slip amount is smaller than a threshold value, for example, lock-up clutch control unit 456 performs sweep control without performing initial control on lock-up clutch 210.

The "initial control" refers to control that maintains predetermined engagement force until predetermined time elapses, before providing sweep control such that engagement force of lock-up clutch 210 becomes engagement force that corresponds to the engaged state. The "sweep control" refers to control that increases a command value for the control solenoid from a current command value to a command value that corresponds to the engaged state of lock-up clutch 210 at a certain rate of change.

Further, if a slip amount is equal to or larger than a threshold value of a slip amount, for example, lock-up clutch control unit 456 performs sweep control after performing initial control of lock-up clutch 210. Note that the threshold value refers to an amount smaller than the predetermined amount described above.

Timer unit 458 resets a count value to an initial value at a point in time when control of lock-up clutch 210 is started, and adds a predetermined value to the count value at every calculation cycle.

Lock-up state determination unit 460 determines whether or not each of a state of lock-up clutch 210 and a traveling state of the vehicle is a predetermined state. In the present embodiment, lock-up state determination unit 460 determines whether or not a slip amount I of lock-up clutch 210 is larger than I (0). Further, lock-up state determination unit 460 determines whether or not the brake signal is off. Further, lock-up state determination unit 460 determines whether or not the vehicle is in a driven state. If a fuel injection amount J for each ignition is smaller than J (0), for example, lock-up state determination unit 460 determines that the vehicle is in a driven state. Each of I (0) and J (0) is a predetermined value, and adapted by an experiment or the like. Note that lock-up state determination unit 460 may also turn on a state determination flag if, for example, all of the condition for a slip amount, the condition for a brake signal, and the condition for a fuel injection amount are established.

Small injection amount learning unit 462 performs small injection amount learning. Note that small injection amount learning unit 462 may also perform the small injection amount learning when the state determination flag is turned on. The small injection amount learning has been described above, and hence the detailed description thereof will not be repeated.

Learning termination determination unit 464 determines whether or not the small injection amount learning should be terminated or not. Specifically, learning termination determination unit 464 determines that the small injection amount learning should be terminated when the count value counted by timer unit 458 becomes equal to or larger than a count value that corresponds to the elapse of predetermined time L from the start of the control of the lock-up clutch. Further, learning termination determination unit 464 determines that the small injection amount learning should-be terminated when turbine rotation speed NT becomes equal to or smaller than NT (1) before predetermined time L elapses.

In the present embodiment, each of inhibition request determination unit 452, execution condition determination unit 454, lock-up clutch control unit 456, timer unit 458, lock-up state determination unit 460, small injection amount learning unit 462, and learning termination determination unit 464 is described as a unit functioning as software and implemented by operation processing unit 450, namely, a CPU, executing a program stored in storage unit 500. However, each of them may also be implemented by hardware. Note that such a program is recorded in a recording medium and installed on the vehicle.

Storage unit 500 stores various types of information, programs, threshold values, maps, and others, and the data is read therefrom or stored therein, as needed, by operation processing unit 450.

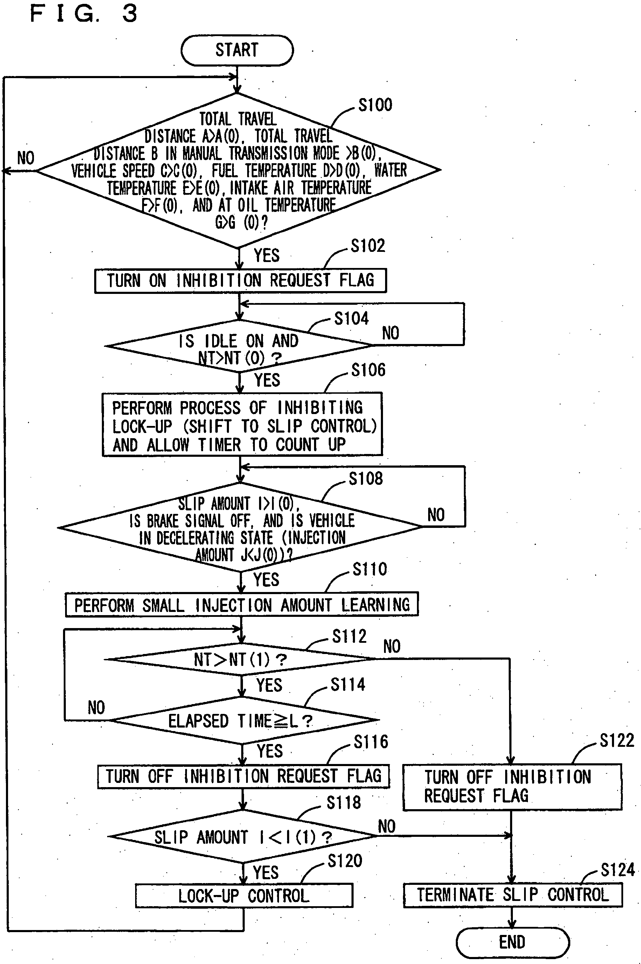

A control structure of the program executed by the ECU identified as the control device for the vehicle according to the present embodiment will now be described with reference to Fig. 3.

In step (which will hereinafter be described as S) 100, ECU 1000 determines whether or not the predetermined condition is established. As described above, the predetermined condition includes the condition that total travel distance A is longer than A (0), the condition that total travel distance B in the manual transmission mode is longer, than B (0), the condition that vehicle speed C is higher than C (0), the condition that fuel temperature D is higher than D (0); the condition that water temperature E is higher than E (0), the condition that intake air temperature F is higher than F (0), and the condition that AT oil temperature G is higher than G (0). If the predetermined condition is established (YES in S100), the process is moved to S102. If not so (NO in S100), the process is returned to S100.

In S102, ECU 1000 turns on the inhibition request flag, which inhibits lock-up clutch 210 from being in the engaged state. In S104, ECU 1000 determines whether or not engine 100 is in an idle state and turbine rotation speed NT is larger than NT (0). If engine 100 is in the idle state and turbine rotation speed NT is larger than NT (0) (YES in S104), the process is moved to S106. If not so (NO in S104), the process is returned to S104.

In S106, ECU 1000 performs a process of inhibiting lock-up clutch 210 from being in the engaged state. Stated differently, ECU 1000 controls engagement force of lock-up clutch 210 such that a slip amount becomes a predetermined amount. Further, ECU 1000 activates a timer.

In S108, ECU 1000 determines whether or not slip amount I is larger than I (0), the brake signal is in an off state, and the vehicle is in a decelerating state. If slip amount I is larger than I (0), the brake signal is in the off state, and the vehicle is in the decelerating state (YES in S108), then the process is moved to S110. If not so (NO in S108), the process is returned to S108.

In S110, ECU 1000 performs small injection amount learning. In S112, ECU 1000 determines whether or not turbine rotation speed NT is larger than NT (1). If turbine rotation speed NT is larger than NT (1) (YES in S 112), the process is moved to S114. If not so (NO in S112), the process is moved to S122.

In S114, ECU 1000 determines whether or not elapsed time measured by the timer is at least predetermined time L. If the elapsed time is at least predetermined time L (YES in S 114), the process is moved to S116. If not so (NO in S114), the process is returned to S112.

In S 116, ECU 1000 turns off the inhibition request flag. In S118, ECU 1000 determines whether or not slip amount I is smaller than I (1). If slip amount I is smaller than I (1) (YES in S 118), the process is moved to S 120. If not so (NO in S118), the process is moved to S124. In S120, ECU 1000 performs lock-up control. In S 122, ECU 1000 turns off the inhibition request flag. In S 124, ECU 1000 terminates the slip control.

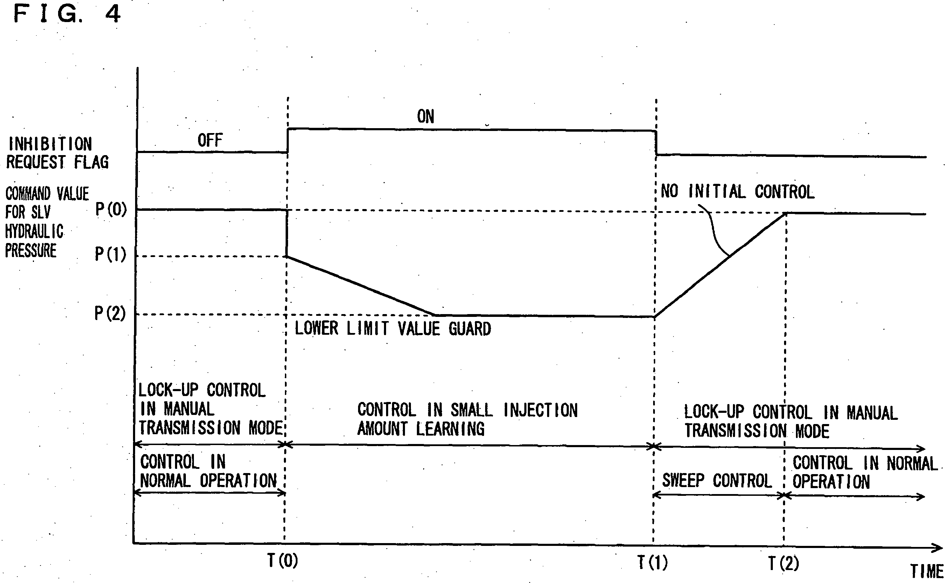

An operation of ECU 1000 identified as the control device for the vehicle according to the present embodiment based on the above-described structure and flowchart will hereinafter be described with reference to Figs. 4-6.

For example, assume the case where the inhibition request flag is in an off state and lock-up clutch 210 is in the engaged state. In this case, lock-up clutch 210 is controlled such that it is in the engaged state all the time in the manual transmission mode.

As shown in Fig. 4, if the predetermined condition is established at time T (0) (YES in S100), the inhibition request flag is turned on (S102). At this time, if engine 100 is in an idle state and turbine rotation speed NT is larger than NT (0) (YES in S104), the process of inhibiting lock-up is performed (S106), and slip control is started such that a slip amount of lock-up clutch 210 becomes a predetermined amount. Further, count-up of the timer is started.

In other words, a command value for the control solenoid in lock-up clutch 210 is instantaneously decreased from P (0) to P (1) at time T (0), and after time T (0), decreased at a certain rate of change from P (1) to P (2), which is a lower limit value guard. Engagement force of lock-up clutch 210 is decreased as the command value is decreased, and hence a slip amount of lock-up clutch 210 is increased so that lock-up clutch 210 is brought into the semi-engaged state. As such, by instantaneously decreasing the command value from P (0) to P (1), it is possible to suppress torque fluctuations during a shift from the engaged state to the semi-engaged state. Therefore, a passenger's feeling that the vehicle is not in a normal state owing to occurrence of shock or the like can be suppressed.

If slip amount I is larger than I (0), the brake signal is in an off state, and the vehicle is in a decelerating state for a period from time T (0) to time T (1) (YES in S108), then small injection amount learning is performed (S110).

At time T (1), if turbine rotation speed NT does not become equal to or smaller than NT (1) (YES in S112) and the elapsed time becomes at least predetermined time L (YES in S114), the inhibition request flag is turned off (S116). At this time, if slip amount I is smaller than I (1) (YES in S118), lock-up control is performed (S120).

For example, if slip amount I is equal to or smaller than I (2), which is smaller than I (1), sweep control is performed for a period from time T (1) to time T (2) as shown in Fig. 4. Therefore, the command value for the control solenoid in lock-up clutch 210 in the semi-engaged state is sweep-controlled such that the command value is increased at a certain rate of change from P (2) to command value P (0) that corresponds to the engaged state. After time T (2), control in normal operation is performed. The control in normal operation refers to control that controls engagement force of lock-up clutch 210 in accordance with a traveling state of the vehicle.

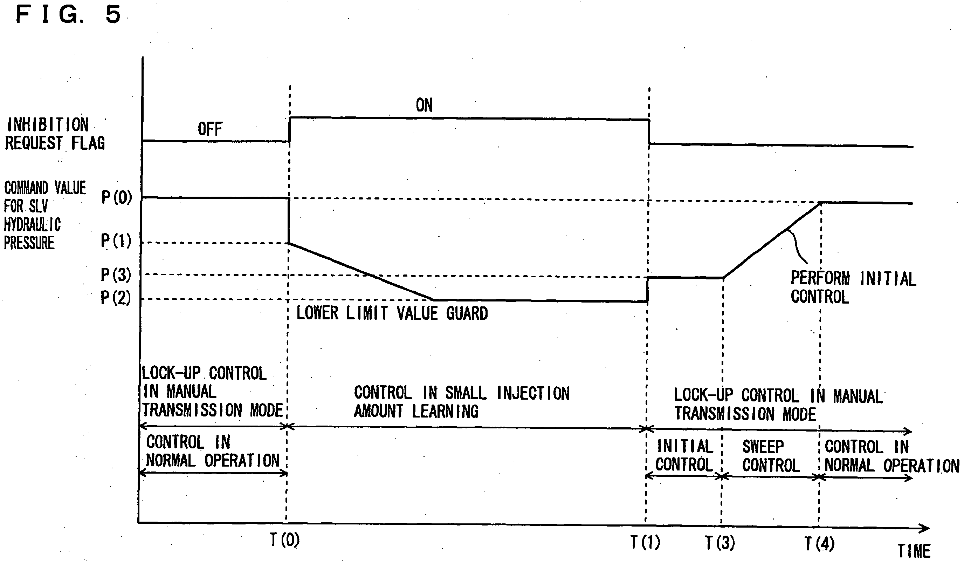

As shown in Fig. 5, if the slip amount is larger than I (2), a predetermined command value P (3) is maintained from time T (1) to time T (3), at which predetermined time elapses. Note that the change in the inhibition request flag and the change in the command value for the control solenoid by time T (1) in Fig. 5 are the same as those by time T (1) in Fig. 4. Therefore, the detailed description thereof will not be repeated.

Further, predetermined command value P (3) is not a particularly-limited value as long as it causes change in slip amount in a decreasing manner. By maintaining predetermined command value P (3), slip amount I is decreased. For a period from time T (3) to time T (4), the command value for the control solenoid in lock-up clutch 210 in the semi-engaged state is then sweep-controlled such that it is increased at a certain rate of change from P (3) to command value P (0), which corresponds to the engaged state. Furthermore, after time T (4), control in normal operation is performed. In other words, command value P (0) is maintained.

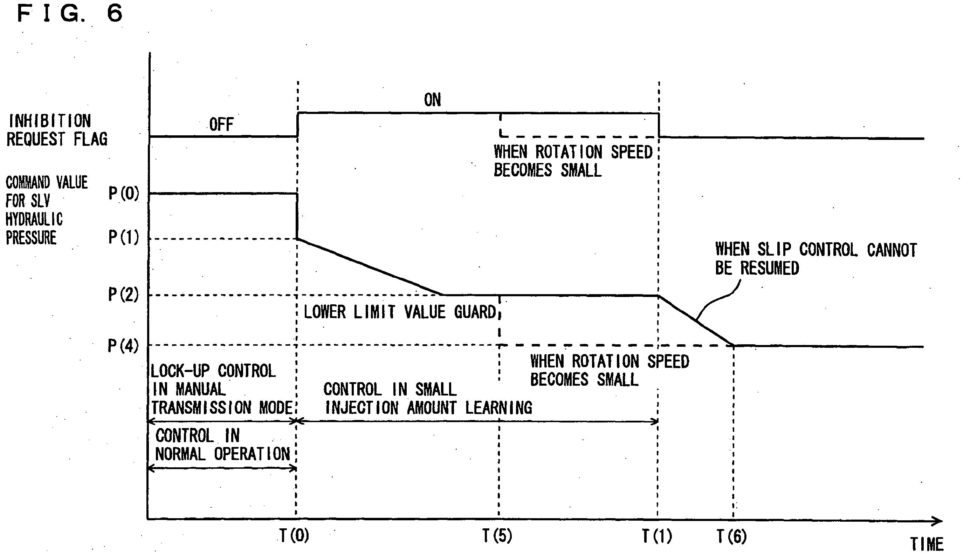

In contrast, as shown in Fig. 6, if turbine rotation speed NT becomes equal to or smaller than NT (1) at time T (5) before the elapsed time becomes at least predetermined time L (prior to time T (1)) (NO in S112), the inhibition request flag is turned off as shown by a dashed line in Fig. 6 (S124), and the slip control is terminated (S124). Therefore, at time T (5), the command value for the control solenoid in lock-up clutch 210 in the semi-engaged state is decreased instantaneously from P (2) to command value P (4), which corresponds to the released state. Engagement force of lock-up clutch 210 is thereby decreased, and hence stalling of engine 100 is avoided.

Further, as shown by a solid line in Fig. 6, at time T (1), if turbine rotation speed NT does not become equal to or smaller than NT (1) (YES in S112), the elapsed time becomes at least predetermined time L (YES in S114), and slip amount I is still equal to or larger than I (1) even if the inhibition request flag is turned off (S116) (NO in S118), then the slip control is terminated (124). Therefore, for a period from time T (1) to time T (6), the command value for the control solenoid in lock-up clutch 210 in the semi-engaged state is sweep-controlled such that it is decreased at a certain rate of change from P (2) to command value P (4), which corresponds to the released state. Furthermore, after time T (6), command value P (4) is maintained.

As described above, with the control device for the vehicle according to the present embodiment, it is possible to learn about a relation between a fuel injection amount of the diesel engine and generated torque when the lock-up clutch is in the semi-engaged state, and hence sufficient learning accuracy can be ensured. Further, when the predetermined condition for starting the learning is established, the lock-up clutch is controlled to be in the semi-engaged state. Therefore, by setting the condition such that sufficient accuracy can be obtained for the injection amount learning, a learning frequency can be ensured.

In particular, in the manual transmission mode, the lock-up clutch tends to be in the engaged state all the time, and hence if the ratio of the total travel distance in the manual transmission mode to the total travel distance is high, it can be determined that a frequency of performing the learning is low. Therefore, by bringing the lock-up clutch into the semi-engaged state and starting the injection amount learning when at least the condition for the total travel distance of the vehicle and the condition for the total travel distance in the manual transmission mode are established, it is possible to ensure sufficient learning accuracy. Further, if the condition for starting the learning is established, the lock-up clutch is controlled to be in the semi-engaged state and the injection amount learning is started, and hence it is possible to ensure a learning frequency with which sufficient accuracy can be obtained for the injection amount learning.

Accordingly, it is possible to provide the control device for the vehicle and the control method for the vehicle, both of which control the lock-up clutch such that it is possible to ensure a frequency of injection amount learning with which sufficient accuracy can be obtained.

Further, it is possible to start the learning when the condition for a traveling state of the vehicle, an operating state of the engine, or a state of the automatic transmission is established in addition to the condition for the total travel distance of the vehicle and the condition for the total travel distance in the manual transmission mode. Therefore, it is possible to perform the learning at an appropriate point in time when sufficient learning accuracy can be obtained, to thereby ensure learning accuracy.

## Claims

1. A control device for a vehicle equipped with a diesel engine (100) and an automatic transmission which includes a fluid coupling (200) provided with a lock-up clutch (210), said lock-up clutch (210) being controlled to be in any of an engaged state, a semi-engaged state, and a released state in accordance with a state of said vehicle, said control device comprising:
detection means (442, 444, 446) for detecting information which relates to the state of said vehicle; ,
determination means (454) for determining whether or not a predetermined condition for starting learning about a relation between a fuel injection amount of said diesel engine (100) and generated torque is established, based on said detected information;
control means (456) for controlling, when said learning condition is established, engagement force of said lock-up clutch (210) such that said lock-up clutch (210) is brought into said semi-engaged state; and
learning means (462) for starting learning when said lock-up clutch is brought into said semi-engaged state,
wherein said learning means (462) starts said learning when said vehicle is in a coasting state and a slip amount of said lock-up clutch (210) becomes a slip amount which corresponds to said semi-engaged state.

2. The control device for the vehicle according to claim 1, wherein
said automatic transmission has an automatic transmission mode in which gear shifting is performed automatically in accordance with a traveling state of said vehicle, and a manual transmission mode in which gear shifting is performed in accordance with a driver's manipulation instruction, and
said predetermined condition includes at least a condition for a total travel distance of said vehicle and a condition for a total travel distance in said manual transmission mode.

3. The control device for the vehicle according to claim 2, wherein said predetermined condition includes, in addition to the condition for the total travel distance of said vehicle and the condition for the total travel distance in said manual transmission mode, at least one of a condition for a speed of said vehicle, a condition for a temperature of fuel, a condition for a temperature of a cooling liquid which circulates through said diesel engine (100), a condition for a temperature of intake air of said diesel engine (100), and a condition for a temperature of hydraulic oil which circulates through said automatic transmission.

4. The control device for the vehicle according to any of claims 1 to 3, wherein said control means (456) controls the engagement force of said lock-up clutch (210) such that a slip amount of said lock-up clutch (210) becomes a predetermined amount.

5. The control device for the vehicle according to any of claims 1 to 4, wherein said learning means (462) stops said learning when a rotation speed of an output shaft of said fluid coupling (200) becomes smaller than a predetermined rotation speed.

6. The control device for the vehicle according to any of claims 1 to 5, wherein said learning means (462) stops said learning at an elapse of predetermined time from the start of said learning.

7. The control device for the vehicle according to claim 6, wherein, when a slip amount of said lock-up clutch (210) is larger than a predetermined amount at the elapse of said predetermined time, said control means (456) controls the engagement force of said lock-up clutch (210) such that said lock-up clutch (210) is prevented from returning to said engaged state.

8. The control device for the vehicle according to any of claims 1 to 7, wherein said learning means (462) learns about the relation between said fuel injection amount and said generated torque based on a torque fluctuation amount obtained when a predetermined amount of fuel is injected.

9. A control method for a vehicle equipped with a diesel engine (100) and an automatic transmission which includes a fluid coupling (200) provided with a lock-up clutch (210), said lock-up clutch (210) being controlled to be in any of an engaged state, a semi-engaged state, and a released state in accordance with a state of said vehicle, the control method comprising:
a detection step of detecting information which relates to the state of said vehicle;
a determination step of determining whether or not a predetermined condition for starting learning about a relation between a fuel injection amount of said diesel engine (100) and generated torque is established, based on said detected information;
a control step of controlling, when said learning condition is established, engagement force of said lock-up clutch (210) such that said lock-up clutch (210) is brought into said semi-engaged state; and
a learning step of starting said learning when said lock-up clutch (210) is brought into said semi-engaged state,
wherein said learning step starts said learning when said vehicle is in a coasting state and a slip amount of said lock-up clutch (210) becomes a slip amount which corresponds to said semi-engaged state.

10. The control method for the vehicle according to claim 9, wherein
said automatic transmission has an automatic transmission mode in which gear shifting is performed automatically in accordance with a traveling state of said vehicle, and a manual transmission mode in which gear shifting is performed in accordance with a driver's manipulation instruction, and
said predetermined condition includes at least a condition for a total travel distance of said vehicle and a condition for a total travel distance in said manual transmission mode.

11. The control method for the vehicle according to claim 10, wherein said predetermined condition includes, in addition to the condition for the total travel distance of said vehicle and the condition for the total travel distance in said manual transmission mode, at least one of a condition for a speed of said vehicle, a condition for a temperature of fuel, a condition for a temperature of a cooling liquid which circulates through said diesel engine (100), a condition for a temperature of intake air of said diesel engine (100), and a condition for a temperature of hydraulic oil which circulates through said automatic transmission.

12. The control method for the vehicle according to any of claims 9 to 11, wherein said control step controls the engagement force of said lock-up clutch (210) such that a slip amount of said lock-up clutch (210) becomes a predetermined amount.

13. The control method for the vehicle according to any of claims 9 to 12, wherein said learning step stops said learning when a rotation speed of an output shaft of said fluid coupling (200) becomes smaller than a predetermined rotation speed.

14. The control method for the vehicle according to claim 9 to 13, wherein said learning step stops said learning at an elapse of predetermined time from the start of said learning.

15. The control method for the vehicle according to claim 14, wherein, when a slip amount of said lock-up clutch (210) is larger than a predetermined amount at the elapse of said predetermined time, said control step controls the engagement force of said lock-up clutch (210) such that said lock-up clutch (210) is prevented from returning to said engaged state.

16. The control method for the vehicle according to any of claims 9 to 15, wherein said learning step learns about the relation between said fuel injection amount and said generated torque based on a torque fluctuation amount obtained when a predetermined amount of fuel is injected.

## Patentansprüche

1. Steuervorrichtung für ein Fahrzeug, das mit einem Dieselmotor (100) und einem Automatikgetriebe, das eine Flüssigkeitskupplung (200), die mit einer Lock-up-Kupplung (210) versehen ist, beinhaltet, wobei die Lock-up-Kupplung (210) so gesteuert wird, dass sie sich in einem von einem eingreifenden, einem halb-eingreifenden und einem gelösten Zustand in Übereinstimmung mit einem Zustand des Fahrzeugs befindet, ausgerüstet ist, wobei die Steuervorrichtung aufweist:
eine Erfassungseinrichtung (442, 444, 446) zum Erfassen von Informationen, die sich auf den Zustand des Fahrzeugs beziehen;
eine Bestimmungseinrichtung (454) zum Bestimmen auf Basis der erfassten Informationen, ob eine vorgegebene Bedingung, um zu beginnen, etwas über ein Verhältnis zwischen einer Kraftstoffeinspritzmenge des Dieselmotors (100) und einem erzeugten Drehmoment zu lernen, vorliegt oder nicht;
eine Steuereinrichtung (456) zum Steuern einer Eingriffskraft der Lock-up-Kupplung (210), wenn die Lernbedingung vorliegt, so dass die Lock-up-Kupplung (210) in den halb-eingreifenden Zustand gebracht wird; und
eine Lerneinrichtung (462) zum Starten des Lernens, wenn die Lock-up-Kupplung in den halb-eingreifenden Zustand gebracht wird,
wobei die Lerneinrichtung (462) das Lernen beginnt, wenn sich das Fahrzeug in einem Ausrollzustand befindet und eine Schlupfmenge der Lock-up-Kupplung (210) eine Schlupfmenge wird, die dem halb-eingreifenden Zustand entspricht.

2. Steuervorrichtung für das Fahrzeug nach Anspruch 1, wobei das Automatikgetriebe einen Automatikgetriebemodus, in dem die Gangschaltung automatisch in Übereinstimmung mit einem Fahrzustand des Fahrzeugs durchgeführt wird, und einen manuellen Getriebemodus, in dem die Gangschaltung in Übereinstimmung mit einer Schalteingabe eines Fahrers durchgeführt wird, aufweist, und
die vorgegebene Bedingung zumindest eine Bedingung für eine gesamte Fahrdistanz des Fahrzeugs und eine Bedingung für eine gesamte Fahrdistanz in dem manuellen Getriebemodus beinhaltet.

3. Steuervorrichtung für das Fahrzeug nach Anspruch 2, wobei die vorgegebene Bedingung zusätzlich zu der Bedingung für die gesamte Fahrdistanz des Fahrzeugs und der Bedingung für die gesamte Fahrdistanz in dem manuellen Getriebemodus zumindest eines von einer Bedingung für eine Geschwindigkeit des Fahrzeugs, einer Bedingung für eine Temperatur des Kraftstoffs, einer Bedingung für eine Temperatur einer Kühlflüssigkeit, die durch den Dieselmotor (100) zirkuliert, einer Bedingung für eine Temperatur einer Ansaugluft des Dieselmotors (100), und einer Bedingung für eine Temperatur eines Hydrauliköls, das durch das Automatikgetriebe zirkuliert, beinhaltet.

4. Steuervorrichtung für das Fahrzeug nach einem der Ansprüche 1 bis 3, wobei die Steuereinrichtung (456) die Eingriffskraft der Lock-up-Kupplung (210) so steuert, dass eine Schlupfmenge der Lock-up-Kupplung (210) eine vorgegebene Menge wird.

5. Steuervorrichtung für das Fahrzeug nach einem der Ansprüche 1 bis 4, wobei die Lerneinrichtung (462) das Lernen beendet, wenn eine Drehzahl einer Ausgangswelle der Flüssigkeitskupplung (200) geringer wird als eine vorgegebene Drehzahl.

6. Steuervorrichtung für das Fahrzeug nach einem der Ansprüche 1 bis 5, wobei die Lerneinrichtung (462) das Lernen bei Verstreichen einer vorgegebenen Zeit ab dem Beginn des Lernens beendet.

7. Steuervorrichtung für das Fahrzeug nach Anspruch 6, wobei, wenn nach dem Verstreichen der vorgegebenen Zeit eine Schlupfmenge der Lock-up-Kupplung (210) größer ist als eine vorgegebene Menge, die Steuereinrichtung (456) die Eingriffskraft der Lock-up-Kupplung (210) so steuert, dass verhindert wird, dass die Lock-up-Kupplung (210) in den Eingriffszustand zurückkehrt.

8. Steuervorrichtung für das Fahrzeug nach einem der Ansprüche 1 bis 7, wobei die Lerneinrichtung (462) etwas über das Verhältnis zwischen der Kraftstoffeinspritzmenge und dem erzeugten Drehmoment auf Basis einer Drehmomentfluktuationsmenge lernt, die erhalten wird, wenn eine vorgegebene Kraftstoffmenge eingespritzt wird.

9. Steuerverfahren für ein Fahrzeug, das mit einem Dieselmotor (100) und einem Automatikgetriebe, das eine Flüssigkeitskupplung (200), die mit einer Lock-up-Kupplung (210) versehen ist, beinhaltet, wobei die Lock-up-Kupplung (210) so gesteuert wird, dass sie sich in einem von einem eingreifenden, einem halb-eingreifenden und einem gelösten Zustand in Übereinstimmung mit einem Zustand des Fahrzeugs befindet, ausgerüstet ist, wobei das Steuerverfahren aufweist:
einen Erfassungsschritt zum Erfassen von Informationen, die sich auf den Zustand des Fahrzeugs beziehen;
einen Bestimmungsschritt zum Bestimmen auf Basis der erfassten Informationen, ob eine vorgegebene Bedingung, um zu beginnen, etwas über ein Verhältnis zwischen einer Kraftstoffeinspritzmenge des Dieselmotors (100) und einem erzeugten Drehmoment zu lernen, vorliegt oder nicht;
einen Steuerschritt zum Steuern einer Eingriffskraft der Lock-up-Kupplung (210), wenn die Lernbedingung vorliegt, so dass die Lock-up-Kupplung (210) in den halb-eingreifenden Zustand gebracht wird; und
einen Lernschritt zum Starten des Lernens, wenn die Lock-up-Kupplung in den halb-eingreifenden Zustand gebracht wird,
wobei der Lernschritt das Lernen beginnt, wenn sich das Fahrzeug in einem Ausrollzustand befindet und eine Schlupfmenge der Lock-up-Kupplung (210) eine Schlupfmenge wird, die dem halb-eingreifenden Zustand entspricht.

10. Steuerverfahren für das Fahrzeug nach Anspruch 9, wobei das Automatikgetriebe einen Automatikgetriebemodus, in dem die Gangschaltung automatisch in Übereinstimmung mit einem Fahrzustand des Fahrzeugs durchgeführt wird, und einen manuellen Getriebemodus, in dem die Gangschaltung in Übereinstimmung mit einer Schalteingabe eines Fahrers durchgeführt wird, aufweist, und
die vorgegebene Bedingung zumindest eine Bedingung für eine gesamte Fahrdistanz des Fahrzeugs und eine Bedingung für eine gesamte Fahrdistanz in dem manuellen Getriebemodus beinhaltet.

11. Steuerverfahren für das Fahrzeug nach Anspruch 10, wobei die vorgegebene Bedingung zusätzlich zu der Bedingung für die gesamte Fahrdistanz des Fahrzeugs und der Bedingung für die gesamte Fahrdistanz in dem manuellen Getriebemodus zumindest eines von einer Bedingung für eine Geschwindigkeit des Fahrzeugs, einer Bedingung für eine Temperatur des Kraftstoffs, einer Bedingung für eine Temperatur einer Kühlflüssigkeit, die durch den Dieselmotor (100) zirkuliert, einer Bedingung für eine Temperatur einer Ansaugluft des Dieselmotors (100), und einer Bedingung für eine Temperatur eines Hydrauliköls, das durch das Automatikgetriebe zirkuliert, beinhaltet.

12. Steuerverfahren für das Fahrzeug nach einem der Ansprüche 9 bis 11, wobei der Steuerschritt die Eingriffskraft der Lock-up-Kupplung (210) so steuert, dass eine Schlupfmenge der Lock-up-Kupplung (210) eine vorgegebene Menge wird.

13. Steuerverfahren für das Fahrzeug nach einem der Ansprüche 9 bis 12, wobei der Lernschritt das Lernen beendet, wenn eine Drehzahl einer Ausgangswelle der Flüssigkeitskupplung (200) geringer wird als eine vorgegebene Drehzahl.

14. Steuerverfahren für das Fahrzeug nach Anspruch 9 bis 13, wobei der Lernschlitt das Lernen bei Verstreichen einer vorgegebenen Zeit ab dem Beginn des Lernens beendet.

15. Steuerverfahren für das Fahrzeug nach Anspruch 14, wobei, wenn nach dem Verstreichen der vorgegebenen Zeit eine Schlupfmenge der Lock-up-Kupplung (210) größer ist als eine vorgegebene Menge, die Steuereinrichtung (456) die Eingriffskraft der Lock-up-Kupplung (210) so steuert, dass verhindert wird, dass die Lock-up-Kupplung (210) in den Eingriffszustand zurückkehrt.

16. Steuerverfahren für das Fahrzeug nach einem der Ansprüche 9 bis 15, wobei der Lernschritt etwas über das Verhältnis zwischen der Kraftstoffeinspritzmenge und dem erzeugten Drehmoment auf Basis einer Drehmomentfluktuationsmenge lernt, die erhalten wird, wenn eine vorgegebene Kraftstoffmenge eingespritzt wird.

## Revendications

1. Dispositif de commande pour un véhicule équipé d'un moteur diesel (100) et d'une boîte de vitesses automatique qui comprend un coupleur hydraulique (200) pourvu d'un embrayage de verrouillage (210), ledit embrayage de verrouillage (210) étant commandé pour être dans l'un quelconque des états embrayé, semi-embrayé et débrayé conformément à l'état dudit véhicule, ledit dispositif de commande comprenant :
des moyens de détection (442, 444, 446) pour détecter les informations qui concernent l'état dudit véhicule ;
des moyens de détermination (454) pour déterminer, sur la base desdites informations détectées, si oui ou non une condition prédéterminée est établie pour commencer l'apprentissage au sujet de la relation entre une quantité d'injection de carburant dudit moteur diesel (100) et le couple produit ;
des moyens de commande (456) pour commander, quand ladite condition d'apprentissage est satisfaite, la force d'embrayage dudit embrayage de verrouillage (210) de telle sorte que ledit embrayage de verrouillage (210) soit amené dans ledit état semi-embrayé ; et
un moyen d'apprentissage (462) pour commencer l'apprentissage quand ledit embrayage de verrouillage est amené dans ledit état semi-embrayé,
dans lequel ledit moyen d'apprentissage (462) commence ledit apprentissage quand ledit véhicule est dans un état de marche au point mort et qu'une quantité de glissement dudit embrayage de verrouillage (210) devient une quantité de glissement qui correspond audit état semi-embrayé.

2. Dispositif de commande pour le véhicule selon la revendication 1, dans lequel
ladite boîte automatique comporte un mode automatique de transmission, dans lequel le changement des vitesses s'effectue automatiquement en fonction des conditions de marche dudit véhicule, et un mode manuel de transmission, dans lequel le changement des vitesses s'effectue conformément aux instructions de manipulation du conducteur, et
ladite condition prédéterminée comprend au moins une condition pour une distance totale de déplacement dudit véhicule et une condition pour une distance totale de déplacement dans ledit mode manuel de transmission.

3. Dispositif de commande pour le véhicule selon la revendication 2, dans lequel ladite condition prédéterminée comprend, en plus de la condition pour la distance totale de déplacement dudit véhicule et la condition pour la distance totale de déplacement dans ledit mode manuel de transmission, au moins une condition parmi les conditions concernant la vitesse dudit véhicule, la température de carburant, la température du liquide de refroidissement qui circule à travers ledit moteur diesel (100), la température de l'air d'admission dudit moteur diesel (100) et la température du liquide hydraulique qui circule à travers ladite boîte automatique.

4. Dispositif de commande pour le véhicule selon l'une quelconque des revendications 1 à 3, dans lequel lesdits moyens de commande (456) commandent la force d'embrayage dudit embrayage de verrouillage (210) de telle sorte qu'une quantité de glissement dudit embrayage de verrouillage (210) devienne une quantité prédéterminée de glissement.

5. Dispositif de commande pour le véhicule selon l'une quelconque des revendications 1 à 4, dans lequel ledit moyen d'apprentissage (462) arrête ledit apprentissage quand la vitesse de rotation de l'arbre de sortie dudit coupleur hydraulique (200) tombe en dessous d'une vitesse prédéterminée de rotation.

6. Dispositif de commande pour le véhicule selon l'une quelconque des revendications 1 à 5, dans lequel ledit moyen d'apprentissage (462) arrête ledit apprentissage après que se soit écoulée une durée prédéterminée à compter du début dudit apprentissage.

7. Dispositif de commande pour le véhicule selon la revendication 6, dans lequel, quand la quantité de glissement dudit embrayage de verrouillage (210) est supérieure à une quantité prédéterminée après que se soit écoulée ladite durée prédéterminée, lesdits moyens de commande (456) commandent la force d'embrayage dudit embrayage de verrouillage (210) de telle sorte que ledit embrayage de verrouillage (210) soit empêché de revenir audit état embrayé.

8. Dispositif de commande pour le véhicule selon l'une quelconque des revendications 1 à 7, dans lequel ledit moyen d'apprentissage (462) apprend sur la relation entre ladite quantité d'injection de carburant et ledit couple produit sur la base de la quantité de fluctuation de couple obtenue quand une quantité prédéterminée de combustible est injectée.

9. Procédé de commande pour un véhicule équipé d'un moteur diesel (100) et d'une boîte de vitesses automatique qui comprend un coupleur hydraulique (200) pourvu d'un embrayage de verrouillage (210), ledit embrayage de verrouillage (210) étant commandé pour être dans l'un quelconque des états embrayé, semi-embrayé et débrayé conformément à l'état dudit véhicule, le procédé de commande comprenant :
une étape de détection pour détecter les informations qui concernent l'état dudit véhicule ;
une étape de détermination pour déterminer, sur la base desdites informations détectées, si oui ou non une condition prédéterminée est établie pour commencer l'apprentissage au sujet de la relation entre une quantité d'injection de carburant dudit moteur diesel (100) et le couple produit ;
une étape de commande pour commander, quand ladite condition d'apprentissage est satisfaite, la force d'embrayage dudit embrayage de verrouillage (210) de telle sorte que ledit embrayage de verrouillage (210) soit amené dans ledit état semi-embrayé ; et
une étape d'apprentissage pour commencer ledit apprentissage quand ledit embrayage de verrouillage (210) est amené dans ledit état semiembrayé,
dans lequel ladite étape d'apprentissage commence ledit apprentissage quand ledit véhicule est dans un état de marche au point mort et qu'une quantité de glissement dudit embrayage de verrouillage (210) devient une quantité de glissement qui correspond audit état semi-embrayé.

10. Procédé de commande pour le véhicule selon la revendication 9, dans lequel
ladite boîte automatique comporte un mode automatique de transmission, dans lequel le changement des vitesses s'effectue automatiquement en fonction des conditions de marche dudit véhicule, et un mode manuel de transmission, dans lequel le changement des vitesses s'effectue conformément aux instructions de manipulation du conducteur, et
ladite condition prédéterminée comprend au moins une condition pour une distance totale de déplacement dudit véhicule et une condition pour une distance totale de déplacement dans ledit mode manuel de transmission.

11. Procédé de commande pour le véhicule selon la revendication 10, dans lequel ladite condition prédéterminée comprend, en plus de la condition pour la distance totale de déplacement dudit véhicule et la condition pour la distance totale de déplacement dans ledit mode manuel de transmission, au moins une condition parmi les conditions concernant la vitesse dudit véhicule, la température de carburant, la température du liquide de refroidissement qui circule à travers ledit moteur diesel (100), la température de l'air d'admission dudit moteur diesel (100) et la température du liquide hydraulique qui circule à travers ladite boîte automatique.

12. Procédé de commande pour le véhicule selon l'une quelconque des revendications 9 à 11, dans lequel ladite étape de commande commande la force d'embrayage dudit embrayage de verrouillage (210) de telle sorte qu'une quantité de glissement dudit embrayage de verrouillage (210) devienne une quantité prédéterminée de glissement.

13. Procédé de commande pour le véhicule selon l'une quelconque des revendications 9 à 12, dans lequel ladite étape d'apprentissage arrête ledit apprentissage quand la vitesse de rotation de l'arbre de sortie dudit coupleur hydraulique (200) tombe en dessous d'une vitesse prédéterminée de rotation.

14. Procédé de commande pour le véhicule selon l'une quelconque des revendications 9 à 13, dans lequel ladite étape d'apprentissage arrête ledit apprentissage après que se soit écoulée une durée prédéterminée à compter du début dudit apprentissage.

15. Procédé de commande pour le véhicule selon la revendication 14, dans lequel, quand la quantité de glissement dudit embrayage de verrouillage (210) est supérieure à une quantité prédéterminée après que se soit écoulée ladite durée prédéterminée, ladite étape de commande commande la force d'embrayage dudit embrayage de verrouillage (210) de telle sorte que ledit embrayage de verrouillage (210) soit empêché de revenir audit état embrayé.

16. Procédé de commande pour le véhicule selon l'une quelconque des revendications 9 à 15, dans lequel ladite étape d'apprentissage apprend sur la relation entre ladite quantité d'injection de carburant et ledit couple produit sur la base de la quantité de fluctuation de couple obtenue quand une quantité prédéterminée de combustible est injectée.
